# EUROPÄISCHE PATENTSCHRIFT

(11) **EP 3 438 366 B1**
(45) Veröffentlichungstag und Bekanntmachung des Hinweises auf die Patenterteilung: **21.07.2021**
(21) Anmeldenummer: 18186289.7
(22) Anmeldetag: 30.07.2018
(51) Int. Cl.: E04C 2/52, E04B 5/02, E04H 6/08, E04G 15/06, E04B 2/00

(54) **BETONFERTIGDECKENTEIL FÜR EIN PARKHAUS UND VERFAHREN ZUR HERSTELLUNG**
FINISHED CONCRETE CEILING SECTION FOR A PARKING GARAGE AND METHOD FOR ITS PRODUCTION
PARTIE DE COUVERTURE PRÉFABRIQUÉE EN BÉTON POUR UN GARAGE À ÉTAGES MULTIPLES ET SON PROCÉDÉ DE FABRICATION

(30) Priorität: 03.08.2017 DE 102017117623
(43) Veröffentlichungstag der Anmeldung: 06.02.2019
(73) Patentinhaber: GOLDBECK GmbH, 33649 Bielefeld (DE)
(72) Erfinder: Frey, Heiko, 69493 Hirschberg (DE); Önder, Bülent, 68219 Mannheim (DE); Kumb, Alexander, 68519 Viernheim (DE)
(74) Vertreter: Cohausz & Florack

(56) Entgegenhaltungen:
- EP-A1- 2 063 048
- EP-A1- 2 876 232
- EP-A2- 0 788 212
- DE-A1-102016 111 611
- FR-A1- 2 788 541
- US-A1- 2010 077 681
- US-A1- 2011 131 905

## Beschreibung

Die Erfindung betrifft ein Betonfertigdeckenteil für ein Parkhaus mit einer aus einem Beton hergestellten Bodenplatte und mit einer Ausnehmung, die für die zumindest teilweise Aufnahme einer induktiven Aufladestation in der Bodenplatte vorgesehen ist sowie ein Verfahren zum Herstellen eines Betonfertigdeckenteils für ein Parkhaus.

Die Begriffe "Deckenteil" und "Bodenplatte" werden verwendet, da das Bauteil sowohl als Deckenteil als auch als Bodenteil dient. Die Oberseite ist die Stand- und Fahrfläche für die Fahrzeuge und die Unterseite ist die Decke für ein darunter angeordnetes Geschoss.

Aus der DE 20 2007 005 523 U1 ist ein solches Betonfertigdeckenteil bekannt, das zum Aufbau eines Parkhauses als Bodenplatte in ein Gerüst aus Stahlträgern eingebaut wird. Dabei weist eine solche Bodenplatte im Wesentlichen die Breite eines Stellplatzes für ein Fahrzeug und eine Länge gleich der Summe aus der Länge des Stellplatzes und der halben Breite der Fahrbahn zwischen zwei Reihen von Stellplätzen auf. Als Bewehrung wird in der genannten Schrift eine Stahlbetonbewehrung genannt. Aus der DE 10 2014 000 316 B4 ist eine derartige Bodenplatte mit einer Textilbewehrung bekannt. Eine solche Bewehrung kann auch aus Carbon bestehen.

Die Nutzung von Betonfertigdeckenteilen weist zahlreiche Vorteile gegenüber der Herstellung von Bodenplatten mit Ortbeton auf. Die industrielle werkseitige Herstellung der Betonfertigdeckenteile ermöglicht gleichbleibende und reproduzierbare Herstellungsbedingungen und damit eine hohe Zuverlässigkeit der eingesetzten Bauteile. Zudem ist der Aufbau des Parkhauses in kurzer Zeit und ohne große Zeitverzögerungen möglich.

Die zuvor erwähnten Bodenplatten weisen herstellungsbedingt im Bereich der Oberseite eine höhere Betondichte und somit glatte und weitgehend wasserundurchlässige Oberfläche auf. Diese Eigenschaft wird dadurch erreicht, dass die Seite des Betonfertigteils, die während des Gießens und Aushärtens des Betons unten angeordnet ist, die spätere Oberseite bildet. Da beim Betongießen die unteren Bereiche des Betonvolumens stärker verdichten als die oberen Bereiche, kann das Betonfertigteil in umgedrehter Position in vorteilhafter Weise als Bodenplatte in einem Parkhaus eingesetzt werden. Die Dicke einer zuvor beschriebenen Bodenplatte liegt im Bereich von 10 cm bis 15 cm,wobei die angegebenen Werte auch unterschritten bzw. überschritten werden können.

Bei herkömmlichen Stahlbetonbauteilen kann unter bestimmten Nutzungsbedingungen mit hoher Chlorideinwirkung, die von an den Fahrzeugen anhaftendem Spritzwasser mit Tausalzen herrührt, der Korrosionsschutz der Bewehrung im Laufe der Zeit ganz oder teilweise aufgehoben werden (Depassivierung). Dieser Tatsache wird durch eine ausreichend dicke Betondeckung Rechnung getragen, da die Eindringgeschwindigkeit der zu einer Depassivierung führenden Medien mit zunehmendem Alter stark abnimmt. Bei einem Beton mit ausreichender Stärke wird somit sichergestellt, dass der Betonstahl zumindest über die vorgesehene Nutzungsdauer seine Tragfähigkeit behält.

Bei der herkömmlichen Betonstahlbewehrung übernimmt die Betondeckung weniger eine tragende, sondern in erster Linie eine schützende Funktion. Zur Sicherstellung des Verbundes genügt bereits eine Mindestbetondeckung in der Größenordnung von 4 bis 6 cm öder bis zu 10 cm Betondeckung.

An die technische Ausstattung von Parkhäusern kommen durch den zunehmenden Gebrauch von Elektrofahrzeugen neue Anforderungen zu. Wegen begrenzter Reichweiten der Elektrofahrzeuge im Vergleich zu Fahrzeugen mit Verbrennungsmotoren ist es üblich und auch von den Fahrern gewünscht, dass die Parkdauer auch zum Aufladen der Batterien bzw. Akkumulatoren genutzt werden kann. Dazu sind einerseits kabelgebundene Aufladesysteme bekannt, bei denen der Benutzer eine Kabelverbindung mit der Aufladestation herstellen muss. Somit ist es erforderlich, dass vorgegebene Stellplätze mit einer kabelgebundenen Aufladestation ausgerüstet werden.

Darüber hinaus ist auch das induktive Aufladen von Fahrzeugbatterien möglich, wobei ohne einen mechanischen Kontakt allein durch magnetische Induktion eine Fahrzeugbatterie aufgeladen.wird. Diese Technologie ist zudem für die Anwendungen interessant, bei denen durch selbstfahrende Fahrzeuge der Parkprozess automatisch abläuft. In diesem Fall muss das Aufladen ohne Zutun einer Person erfolgen, also durch induktive Aufladung.

Aufladestationen für ein induktives Aufladen basieren auf der Kopplung zweier Spulen, wie es vom klassischen Transformator her bekannt ist. Da ein hoher Wirkungsgrad zu den wesentlichen Erfolgsfaktoren zählt, kommt es bei der Umsetzung zum einen auf einen geringen Abstand von der Primärspule auf dem Fahrbahn- bzw. Stellplatzboden zur Sekundärspule im Fahrzeug an. Zum anderen ist für minimale Streuverluste eine exakte Positionierung des Fahrzeugs notwendig. Aufgrund speziell ausgelegter Leistungselektronik und entsprechender Spulensysteme funktioniert das induktive Aufladen auch dann mit einem sehr guten Wirkungsgrad, wenn die Sekundärspule im Auto vertikal etwa 20 Zentimeter von der Spule im Boden entfernt ist. Selbst bei einem Luftspalt von 20 Zentimetern wird ein Wirkungsgrad von 93 bis 95 Prozent erreicht. Die Genauigkeit in horizontaler Richtung beschränkt sich beispielsweise auf einen Bereich von ca. 10 cm Versatz gegenüber einer optimalen Position, ohne dass es zu merklichen Verlusten kommt.

Bisherige Aufladesysteme, die hauptsächlich für den privaten Gebrauch bestimmt sind, bestehen aus einer Primärspulenenanordnung, die auf die Bodenoberfläche aufgelegt wird, wobei elektrische Kabel oberflächennah zugeführt werden. Ein solches Anbringen von Aufladesystemen ist jedoch für öffentlich zugängliche Stellplätze wegen zahlreicher Nachteile wenig geeignet. So stellt eine auf der Bodenplatte aufgelegte Aufladestation eine Stolperfalle und zusätzlich ein Hindernis beim Einparken dar. Zudem wird die Reinigung der Bodenplatten erschwert und auch die Diebstahlgefahr ist wegen der öffentlichen Zugänglichkeit ein Problem. Schließlich ist eine offene elektrische Kabelführung unsicher.

Aus der EP 2 876 232 A1 ist ein modularer Unterstellplatz für Fahrzeuge bekannt, welcher eine Bodenplatte, zwei Seitenwände und ein Dach umfasst. Auf dem Dach ist eine Anzahl von Solarmodulen angeordnet, die mit in der Bodenplatte angeordneten Induktionsspulen gekoppelt sind.

Die EP 0 788 212 A2 offenbart einen Parkplatz für ein Elektrofahrzeug, welcher eine Ausnehmung für eine Spulenbewegungsvorrichtung aufweist, wobei die Spulenbewegungsvorrichtung dazu ausgestaltet ist, eine Primärspule in der Ausnehmung bewegbar abzustützen bzw. zu tragen.

Daher liegt der vorliegenden Erfindung das technische Problem zugrunde, die Ausstattung von Parkhäusern mit induktiven Aufladesystemen zu verbessern.

Das zuvor aufgeführte technische Problem wird erfindungsgemäß dadurch gelöst, dass die Bodenplatte mit einer Bewehrung versehen ist, dass die Ausnehmung in der Oberseite der Bodenplatte ausgebildet ist und dass die Ausnehmung eine Schutzschicht gegen das Eindringen von Wasser in die Bodenplatte aufweist.

Erfindungsgemäß ist daher erkannt worden, dass die Bodenplatte für ein Parkhaus eine geeignet ausgestaltete Ausnehmung bzw. Vertiefung aufweist, in der die Aufladestation zumindest zu einem Teil in vertikaler Richtung aufgenommen wird. In dieser Ausnehmung kann die Aufladestation fixiert und gegebenenfalls diebstahlsicher befestigt werden. Zudem kann die elektrische Zuleitung in der Bodenplatte zumindest teilweise und somit stolpersicher integriert werden. Die Aufladestation wird also mehr oder weniger mit der Bodenplatte "verschmolzen".

Die Bewehrung der Bodenplatte kann aus verschiedenen Materialien bestehen. Beispielsweise besteht die Bewehrung aus Stahl, insbesondere Baustahl und/oder aus einem Textil, vorzugsweise bestehend aus Fasern aus Kunststoff, Carbon/Kohlefasern oder einem anderen Textilmaterial. Vorzugsweise ist die Textilbewehrung eine nichtmetallische Bewehrung, insbesondere bestehend aus Glasfasern, Carbonfasern, Aramidfasern oder Basaltfasern oder eine Mischung hiervon. Außerdem kann die Textilbewehrung aus textilen bzw. anorganischen Fasern oder Faserbündeln bestehen. Anstelle einer Gewebestruktur kann die Bewehrung aus einzelnen, insbesondere unregelmäßig verteilten Fasern, insbesondere Carbonfasern bestehen.

Besteht die Bewehrung der Bodenplatte aus einer nicht-rostanfälligen Bewehrung, beispielsweise aus einer Textilbewehrung, insbesondere aus Carbon, so kann die Ausnehmung in das Material der Bodenplatte eingearbeitet werden und eine nachfolgend beschriebene Verstärkung der Betonabdeckung der Bewehrung ist nicht erforderlich. Somit ergibt sich eine erfindungsgemäße einfache Bodenplatte, insbesondere aus Carbonbeton, in der eine Ausnehmung eingebracht ist.

Das zuvor beschriebene alleinige Einbringen der Ausnehmung in die Bodenplatte erfordert aus den oben geschilderten Gründen bei einer Stahlbewehrung jedoch eine Verstärkung der gesamten Bodenplatte, da auch im Bereich der Ausnehmung ein ausreichender Schutz vor Korrosion gewährleistet werden muss. Gleichwohl wird der Nachteil einer größeren Dicke der Bodenplatte durch die Vorteile bei der Anbringung der induktiven Aufladestation mehr als aufgehoben.

Das Problem der geringeren Stärke der Bodenplatte im Bereich der Ausnehmung wird dadurch behoben, dass die Ausnehmung eine Schutzschicht gegen das Eindringen von Wasser in die Bodenplatte aufweist. Durch diese Zusatzmaßnahme kann die ursprüngliche Dicke der Bodenplatte beibehalten werden, wodurch der Einsatz von mehr Beton vermieden wird.

Vorzugsweise ist die Schutzschicht aus einem der Materialien ausgewählt: Kunststoff mit guter Anbindung an den Beton, Bitumen, Asphalt, Lack, Epoxydharz, Metall, insbesondere Edelstahl oder Aluminium. In jedem Fall bietet das Material der Schutzschicht einen ausreichenden Schutz vor dem Eindringen von chloridhaltigem Wasser in den Beton im Bereich und vor allem unter der Ausnehmung.

Sofern erforderlich kann die Schutzschicht mit geeigneten Klebern mit dem Beton der Bodenplatte verbunden werden. Insbesondere gilt dieses für eine Kunststoffbeschichtung aus einem vorgefertigten Kunststoffteil, das in der Ausnehmung, insbesondere vollflächig, verklebt wird.

Eine Schutzschicht aus Bitumen, Asphalt oder Lack wird als fließfähige Schicht aufgebracht und verbindet sich vorzugsweise vollflächig mit der Oberfläche der Ausnehmung. Bevorzugt wird ein Epoxydharzsystem eingesetzt, das insbesondere mehrschichtig aufgebracht wird. So ist eine Ausgestaltung der Epoxydharzbeschichtung als ein- oder mehrschichtiges Oberflächenschutzsystem OS 8 oder OS 11 nach der Richtlinie RiLi SIB ("Schutz und Instandsetzung von Betonbauteilen") des Deutschen Ausschusses für Stahlbeton (DAfStb) möglich.

Die Schutzschicht kann auch aus einem Ultrahochleistungsbeton (englisch Ultra High Performance Concrete, gebräuchliche Abkürzung UHPC) oder aus einem Ultrahochfester Beton (UHFB) bestehen. Diese Betonsorte zeichnet sich durch besonders hohe Dichtigkeit und Festigkeit gegenüber einem normalen Beton aus.

In einer ersten vorteilhaften Ausgestaltung weist die Ausnehmung eine Unterseite und Seitenwände auf und bildet somit eine Wanne. Die Schutzschicht ist dann an der Unterseite und an den Seitenwänden ausgebildet und bildet den Schutz vor Eindringen von Wasser an allen Seiten der Ausnehmung, die mit Beton umgeben sind.

Die Ausnehmung ist in der Oberseite der Bodenplatte ausgebildet, um einen möglichst geringen Abstand von der Sekundärspule im Fahrzeug zu erreichen.

Bei einer Ausnehmung an der Unterseite der Bodenplatte, muss die besonders dichte Oberseite der Bodenplatte nicht durch die Ausnehmung beschädigt werden. Gleichwohl muss der Nachteil eines größeren Abstandes der in der Ausnehmung angeordneten Primärspule zur Sekundärspule im Fahrzeug in Kauf genommen werden. Die Verkabelung der Aufladestation verläuft dagegen in diesem Fall in vorteilhafter Weise vollständig an der Unterseite der Bodenplatte und stellt keine Stolpergefahr mehr dar.

Dieser Vorteil kann bei einer in der Oberseite der Bodenplatte ausgebildeten Ausnehmung dadurch erreicht werden, dass die Ausnehmung einen Durchgang zur Unterseite der Bodenplatte aufweist. Durch diesen Durchgang kann die elektrische Versorgung der Aufladestation in der Ausnehmung von unten erfolgen, ohne dass eine Verkabelung auf der Oberseite der Bodenplatte verlaufen muss.

Mit zumindest einem Teil der zuvor beschriebenen Maßnahmen ist eine Ausgestaltung der Bodenplatte mit einer Dicke von 10 bis 15 cm weiterhin möglich, wobei bevorzugt die Tiefe der Ausnehmung im Bereich von 2 bis 5 cm oder von mehr als 5 cm liegt. Die angegebenen Werte können auch unterschritten bzw. unterschritten werden.

In einer weiteren vorteilhaften Ausgestaltung ist die Ausnehmung als Öffnung der Bodenplatte mit umlaufenden Seitenwänden als Durchbruch ausgebildet, wobei die Schutzschicht an den Seitenwänden ausgebildet ist. In diesem Fall wird die Bodenplatte durch die seitliche Schutzschicht vor dem Eindringen von Wasser geschützt.

Da die Öffnung nach unten nicht abgeschlossen ist, ist es vorteilhaft, dass in der Ausnehmung eine sich horizontal erstreckende Haltevorrichtung zum Tragen und Positionieren der Aufladestation vorgesehen ist. Dabei ist es weiterhin bevorzugt, dass die Haltevorrichtung aus dem gleichen Material wie die Schutzschicht, insbesondere integral mit der Schutzschicht ausgebildet ist. Somit kann in bevorzugter Weise eine Wanne aus dem Material der Schutzschicht ausgebildet und in der Öffnung der Ausnehmung angeordnet sein. Insbesondere kann eine Wanne aus ultrahochfestem Beton (UHPC) gebildet und in die Ausnehmung eingesetzt sein.

Für alle zuvor beschriebenen Ausgestaltungen ist es vorteilhaft, wenn die Ausnehmung einen Deckel aufweist. Dadurch kann die Aufladestation innerhalb des von der Ausnehmung und dem Deckel aufgespannten Volumens angeordnet sein und der Deckel verschließt dieses Volumen und verhindert weitgehend das Eindringen von Wasser und Verunreinigungen in die Ausnehmung.

Wie oben beschrieben worden ist, kommt es auf eine ausreichend gute Positionierung der Aufladestation relativ zum Fahrzeug an. Daher ist es bevorzugt, dass die Ausnehmung in Querrichtung der Bodenplatte an einer vorgegebenen Position, insbesondere mittig zu den Längskanten angeordnet ist. Somit kann ein elektrisch betriebenes Fahrzeug mittig auf dem Stellplatz abgestellt werden, um ein optimales Aufladen der Batterie des Fahrzeugs zu ermöglichen.

Die Positionierung der Aufladestation in Fahrtrichtung ist ebenfalls zu berücksichtigen, so dass in weiter bevorzugter Weise die Ausnehmung in Längsrichtung der Bodenplatte an einer vorgegebenen Position angeordnet ist, um unabhängig vom Fahrzeugtyp ein induktives Aufladen eines Akkumulators des Fahrzeugs zu ermöglichen.

Des Weiteren ist es bevorzugt, dass die Ausnehmung eine Erstreckung in Längsrichtung aufweist, die größer, insbesondere mindestens zweifach größer als die Längsausdehnung der Aufladestation ist. Ebenso oder alternativ dazu kann die Ausnehmung eine Erstreckung in Querrichtung aufweisen, die größer, insbesondere mindestens zweifach größer als die Querausdehnung der Aufladestation ist. Durch eine der beiden oder beide Maßnahmen ist eine variable Positionierung und Fixierung der Aufladestation innerhalb der Ausnehmung möglich. Zudem ist die Ausbildung der Ausnehmung weitgehend unabhängig von der Wahl der Aufladestation, die in unterschiedlichen Größen hergestellt werden.

Das Abstellen von Fahrzeugen auf den Stellplätzen erfolgt nicht immer gleich und in wiederholbarer Genauigkeit. Daher wird als unabhängige Lösung des oben beschriebenen technischen Problems, also unabhängig von der Ausbildung einer Ausnehmung in der Bodenplatte, vorgeschlagen, eine Bewegungsvorrichtung zum Positionieren der Aufladestation auf der Bodenplatte vorzusehen. Bezogen auf die oben beschriebene Lösung ist die Bewegungsvorrichtung dann innerhalb der Ausnehmung angeordnet.

Die Bewegungsvorrichtung weist eine relativ zur Bodenplatte bewegbare Mimik auf, auf der die Aufladestation befestigt werden kann. Durch einen motorischen Antrieb kann dann die Bewegungsvorrichtung in eine Position verfahren werden, in der eine bezogen auf die aktuelle Abstellposition des Fahrzeugs bestmögliche Aufladung der Batterie im Fahrzeug ermöglicht wird. Dabei kann die Bewegungsvorrichtung in vorteilhafter Weise eine Bewegungskomponente in Längsrichtung und/oder in Querrichtung des Stellplatzes aufweisen. Der Bewegungsfreiraum der Ausnehmung kann somit auch nach der Installation der Aufladestation variabel ausgenutzt werden.

Die Bewegungsvorrichtung kann auch ähnlich wie bei einem Rasenmäherroboter ausgebildet sein und eine Bewegung unabhängig von Schienen ermöglichen. Somit kann die Aufladestation ohne Ausnehmung in der Bodenplatte frei auf der Oberfläche der Bodenplatte bewegt werden. Bei einer Anordnung in der Ausnehmung der Bodenplatte kann die Aufladestation frei innerhalb des von der Ausnehmung und der darin angeordneten Schutzschicht aufgespannten Fläche bewegt werden.

Des Weiteren ist es vorteilhaft, wenn die Ausnehmung eine Anhebevorrichtung zum vertikalen Anheben der Aufladestation aufweist. Damit kann bei einem Abstellen des Fahrzeugs auf der Bodenplatte oberhalb der Ausnehmung der vertikale Versatz der Aufladestation in der Ausnehmung zumindest teilweise aufgehoben werden.

Wie eingangs erwähnt worden ist, besteht die Bewehrung der Bodenplatte aus Stahl, insbesondere Baustahl und/oder aus einem Textil, vorzugsweise bestehend aus Fasern aus Kunststoff, Carbon/Kohlefasern oder einem anderen Textilmaterial. Vorzugsweise ist die Textilbewehrung eine nichtmetallische Bewehrung, insbesondere bestehend aus Glasfasern, Carbonfasern, Aramidfasern oder Basaltfasern oder eine Mischung hiervon. Außerdem kann die Textilbewehrung aus textilen bzw. anorganischen Fasern oder Faserbündeln bestehen.

Die für das induktive Aufladen von Batterien erzeugten magnetischen Wechselfelder führen in elektrisch leitfähigen Materialien, also insbesondere in einer Stahlbewehrung, zu induzierten elektrischen Strömen. Diese induzierten Ströme führen einerseits zu einem Wirkverlust und zum anderen zu einer teilweise starken Erwärmung der Stahlbewehrung. Diese Erwärmung ist auf den Bereich der Ausnehmung beschränkt, da die Aufladestationen so dimensioniert und gestaltet werden, dass das entstehende Magnetfeld möglichst gut und weitgehend in Richtung der Sekundärspule verläuft. Gleichwohl wird durch eine dauerhafte und wiederkehrende lokale Erwärmung der Stahlbewehrung eine zusätzliche Belastung in die Bodenplatte eingeleitet.

Daher wird als unabhängige Lösung des oben beschriebenen technischen Problems, also unabhängig von der Ausbildung einer Ausnehmung in der Bodenplatte, vorgeschlagen, dass die Bewehrung im Bereich der Ausnehmung aus einem Textil bestehend aus einem nicht elektrisch leitfähigen Material und außerhalb des Bereichs der Ausnehmung aus Stahl besteht. Somit wird eine hybride Ausgestaltung der Bewehrung der Bodenplatte vorgeschlagen, teilweise bestehend aus herkömmlichem Stahl und teilweise bestehend aus Textil. Wenn die Aufladestation im Bereich der Textilbewehrung angeordnet ist, dann erfolgt keine oder nur eine geringe Erwärmung und Belastung der Bodenplatte. Der vorgenannte Bereich kann dadurch bestimmt werden, dass in einem vorgegebenen Abstand um eine vorgegebene Position der Bodenplatte herum die Textilbewehrung angeordnet ist, die außerhalb dann in eine Stahlbewehrung übergeht.

Bei der Ausgestaltung mit Ausnehmung in der Bodenplatte ist die Ausnehmung im Bereich der Textilbewehrung angeordnet, um ebenfalls die Aufladestation im Bereich der Textilbewehrung anzuordnen.

Das zuvor beschriebene Betonfertigdeckenteil wird werkseitig hergestellt und baustellenseitig in einem Parkhaus installiert. Regelmäßig erfolgt die Installation der induktiven Aufladestation anschließend vor Ort. Ebenso ist es aber auch möglich bereits werkseitig die Aufladestation zu installieren. In diesem Fall ist ein Betonfertigdeckenteil dadurch weitergebildet, dass eine induktive Aufladestation in der Ausnehmung angeordnet, insbesondere befestigt, vorzugsweise mittels Klebstoff oder durch eine mechanische Befestigungsvorrichtung verbunden ist. Als Klebstoff kommt dabei bevorzugt ein 2-komponentiger Kleber auf Epoxydharzbasis zur Anwendung.

Das oben aufgezeigt technische Problem wird erfindungsgemäß auch durch Verfahren zum Herstellen eines Betonfertigdeckenteils für ein Parkhaus nach einem der Ansprüche 1 bis 9 gelöst, bei dem in einer Schalung eine Bewehrung angeordnet wird, bei dem in der Schalung ein Ausschalungselement für das Ausbilden einer Ausnehmung angeordnet wird, bei dem zur Herstellung einer Bodenplatte die Schalung mit einem Beton ausgefüllt wird und bei dem die Ausnehmung mit einer Schutzschicht versehen wird.

In bevorzugter Weise wird nach dem Aushärten des Betons das Ausschalungselement entnommen, so dass die Ausnehmung in der fertigen Bodenplatte ausgebildet ist und danach mit einer Schutzschicht versehen wird, wie es oben beschrieben worden ist.

Alternativ dazu kann nach dem Aushärten des Betons das Ausschalungselement in der Bodenplatte verbleiben und direkt als Schutzschicht verwendet werden. Insbesondere kann dabei das Ausschalungselement aus einem ultrahochfesten Beton (UHPC) bestehen, das sich gut mit dem eingefüllten Beton verbindet.

Im Folgenden wird die Erfindung anhand von Ausführungsbeispielen mit Bezug auf die Zeichnung erläutert. In der Zeichnung zeigen
- Fig. 1: ein Ausführungsbeispiel eines nicht erfindungsgemäßen Betonfertigdeckenteils,
- Fig. 2: ein erstes Ausführungsbeispiel eines erfindungsgemäßen Betonfertigdeckenteils,
- Fig. 3: ein zweites Ausführungsbeispiel eines erfindungsgemäßen Betonfertigdeckenteils,
- Fig. 4: das zweite Ausführungsbeispiel mit eingesetzter Aufladestation,
- Fig. 5: ein drittes Ausführungsbeispiel eines erfindungsgemäßen Betonfertigdeckenteils,
- Fig. 6: ein Betonfertigdeckenteil in einer Draufsicht,
- Fig. 7: ein weiteres Ausführungsbeispiel eines nicht erfindungsgemäßen Betonfertigdeckenteils und
- Fig. 8: ein weiteres Ausführungsbeispiel eines nicht erfindungsgemäßen Betonfertigdeckenteils.

In der nachfolgenden Beschreibung von verschiedenen Ausführungsbeispielen werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

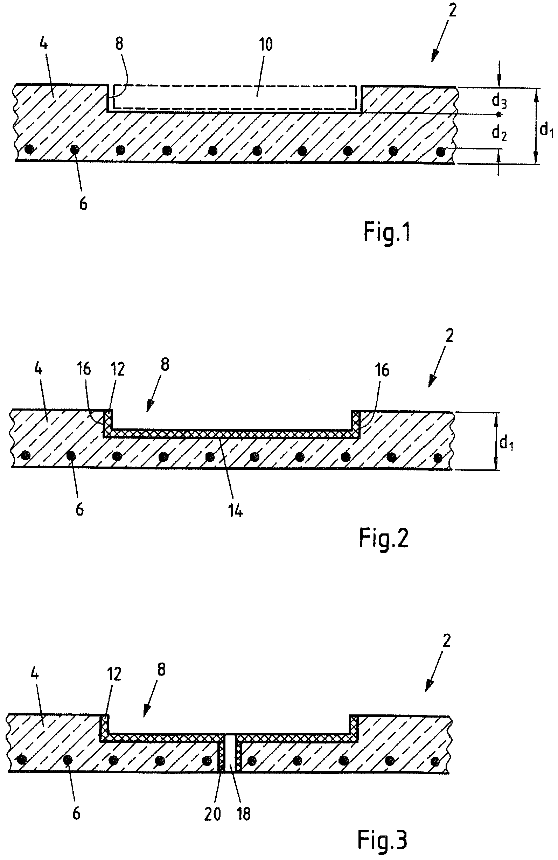

Fig. 1 zeigt ein Ausführungsbeispiel eines Betonfertigdeckenteils 2 für ein Parkhaus, das eine aus einem Beton hergestellte Bodenplatte 4 mit einer Stahlbewehrung 6 aufweist. Eine Ausnehmung 8 ist für die zumindest teilweise Aufnahme einer induktiven Aufladestation 10 (gestrichelt dargestellt) in der Bodenplatte 4 vorgesehen. Somit kann die Aufladestation 10 ganz oder zumindest teilweise in der Bodenplatte 4 versenkt und somit "verschmolzen" werden, um ein zu weites Vorstehen nach oben zu verhindern.

Die Befestigung der induktiven Aufladestation 10 in der Ausnehmung 8 erfolgt in bevorzugter Weise mittels Klebstoff. Als Klebstoff kommt dabei ein 2-komponentiger Kleber auf Epoxydharzbasis zur Anwendung. Alternativ können auch mechanische Befestigungsmittel vorgesehen sein, so dass die Aufladestation 10 eingerastet oder angeschraubt werden kann.

Da die Ausnehmung 4 einen Teil der vertikalen Erstreckung der Bodenplatte 4 entfernt, muss die gesamte Dicke d₁ so weit verstärkt werden, dass die Dicke d₂ unterhalb der Ausnehmung 8 bis zur vertikalen Position der Bewehrung 6 genügend groß ist, um die Bewehrung in ausreichender Weise vor dem Eindringen von Wasser, insbesondere von chloridhaltigen Wasser zu schützen. Mit anderen Worten, die Dicke d₁ ist um die Tiefe d₃ der Ausnehmung 8 gegenüber einer notwendigen Dicke ohne Ausnehmung vergrößert.

Beispielsweise beträgt die Dicke dz 55 mm, die für eine Gewährleistung einer ausreichenden Standfestigkeit der Bodenplatte 4 notwendig ist.

Eine erfindungsgemäße Ausgestaltung ist in Fig. 2 gezeigt. Die Ausnehmung 8 weist hier eine Schutzschicht 12 gegen das Eindringen von Wasser in die Bodenplatte 4 auf. Die Schutzschicht 12 verhindert das Eindringen von Wasser und stellt somit einen zusätzlichen Schutz dar, so dass die Dicke d₁ der Bodenplatte 4 nicht verstärkt zu werden braucht, auch wenn der Abstand zwischen dem Boden der Ausnehmung 8 und der Bewehrung 6 einen vorgegebenen Abstand d₂ (gemäß Fig. 1) von beispielsweise 55 mm nicht einhält.

Die Schutzschicht 12 kann aus einem beliebigen Material hergestellt sein, das die Anforderungen an eine Schutzwirkung erfüllt. Bevorzugt ist das Material der Schutzschicht aus einem der folgenden Materialien ausgewählt: Kunststoff mit guter Anbindung an den Beton, Bitumen, Asphalt, Lack, Epoxydharz, Metall, insbesondere Edelstahl oder Aluminium, ultrahochfester Beton (UHPC - Ultra High Performance Concrete). Das in Fig. 2 dargestellte Ausführungsbeispiel weist eine Schutzschicht 12 aus Epoxydharz in Form eines mehrschichtigen Oberflächenschutzsystems OS 8 oder OS 11 nach der Richtlinie RiLi SIB auf. In diesem Fall beträgt die bevorzugte Dicke der Schutzschicht 12 zwischen 1 und 4 mm, vorzugsweise zwischen 1,5 und 2,5 mm.

Sofern die Schutzschicht 12 aus einem elektrisch leitfähigem Material besteht, wird neben dem Schutz vor Eindringen von Wasser auch noch eine Magnetfeld-Abschirmung verwirklicht. Dadurch wird eine Induktion von Magnetfeldern innerhalb von leitfähigen Bewehrungsmaterialien (Stahl, Carbon) vermindert und Verluste und ein Erwärmen der Bewehrung und damit des Betons können verringert oder sogar vermieden werden. Die Effektivität der Abschirmung hängt dabei nicht nur von der Ausgestaltung der Schutzschicht 12 ab, sondern auch von dem in der Ausnehmung 8 angeordneten Primärspulensystem.

Die Schutzschicht 12 kann während der werkseitigen Herstellung der Bodenplatte 4 eingegossen werden oder die Schutzschicht 12 wird nachträglich mit der Bodenplatte 4 und der Ausnehmung 8 verbunden.

Wie Fig. 2 weiterhin zeigt, weist die Ausnehmung 8 eine Unterseite 14 und Seitenwände 16 auf und bildet somit eine Wanne. Ein ausreichender Schutz wird im dargestellten Ausführungsbeispiel gewährleistet, indem die Schutzschicht 12 an der Unterseite 14 und an den Seitenwänden 16 ausgebildet ist.

Somit kann die Bodenplatte 4 eine Dicke von 10 bis 15 cm aufweisen, während die Tiefe der Ausnehmung 8 im Bereich von 2 bis 5 cm liegt. Die genannten Werte können je nach Anwendung auch unter- bzw. überschritten werden.

Fig. 3 zeigt ein zweites Ausführungsbeispiel mit einem ähnlichen Aufbau wie in Fig. 2. Vorliegend weist die Ausnehmung 8 eine Schutzschicht aus ultrahochfesten Beton (UHPC) auf. Zusätzlich weist die Bodenplatte 4 einen Durchgang 18 zur Unterseite der Bodenplatte 4 auf, durch den eine Kabelverbindung für eine in der Ausnehmung 8 angeordnete Aufladestation 10 (hier nicht dargestellt) zu ermöglichen. Der Durchgang 18 weist umfangseitig ebenfalls eine Schutzschicht 20 auf.

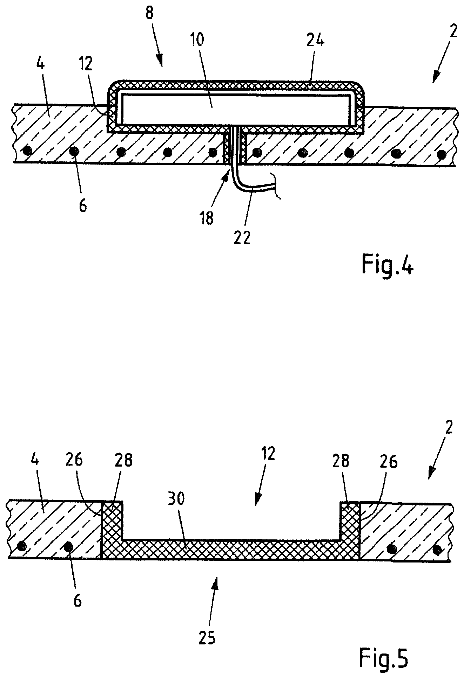

Fig. 4 zeigt das Ausführungsbeispiel nach Fig. 3 mit eingesetzter Aufladestation 10, die mit einem Kabel 22 mit einer elektrischen Versorgung unterhalb der Bodenplatte 4 verbunden ist, wobei das Kabel 22 durch den Durchgang 18 hindurch geführt ist. Des Weiteren weist die Ausnehmung 8 einen Deckel 24 auf, der im geschlossenen Zustand die Ausnehmung 8 mit eingesetzter Aufladestation 10 nach oben hin abschließt. Selbst wenn, wie in Fig. 4 dargestellt ist, der Deckel 24 nach oben vorsteht, um eine Positionierung der Aufladestation möglichst nahe an einem Fahrzeug zu ermöglichen, so ergibt sich insgesamt eine gute Einbindung der Aufladestation in der Bodenplatte 4 mit einer Minimierung der Beeinträchtigung der Nutzung der Bodenplatte 4 in einem Parkhaus durch dessen Benutzer.

Der Deckel 24 besteht bevorzugt aus einem Kunststoff oder aus einem Metall und soll Kräfte aushalten können, die von einem Fahrzeugreifen durch ein Hinwegfahren auf den Deckel 24 ausgeübt werden.

Fig. 5 zeigt ein drittes Ausführungsbeispiel eines erfindungsgemäßen Betonfertigbodenteils 2, bei dem die Ausnehmung 8 als Öffnung 24 mit umlaufenden Seitenwänden 26 in Form eines Durchbruchs ausgebildet ist und bei dem die Schutzschicht 12 an den Seitenwänden 26 ausgebildet ist. Die Schutzschicht 12 hat dabei selbst die Form einer Wanne mit Seitenwänden 28 und einem Boden 30.

Somit wird bei diesem Ausführungsbeispiel die gesamte Stärke der Bodenplatte 4 für die Ausbildung der Ausnehmung genutzt, wobei auch die Bewehrung 6 im Bereich der Ausnehmung 8 unterbrochen ist. Diese Unterbrechung der Bewehrung kann bei der Herstellung der Bodenplatte 4 durch Verstärkungen ausgeglichen werden.

In der Ausnehmung 8 ist somit eine sich horizontal erstreckende Haltevorrichtung in Form des Bodens 30 der Schutzschicht 12 zum Tragen und Positionieren einer Aufladestation (nicht dargestellt) vorgesehen. Somit ist die Haltevorrichtung aus dem gleichen Material wie die Schutzschicht 12 und integral mit der Schutzschicht 12 ausgebildet.

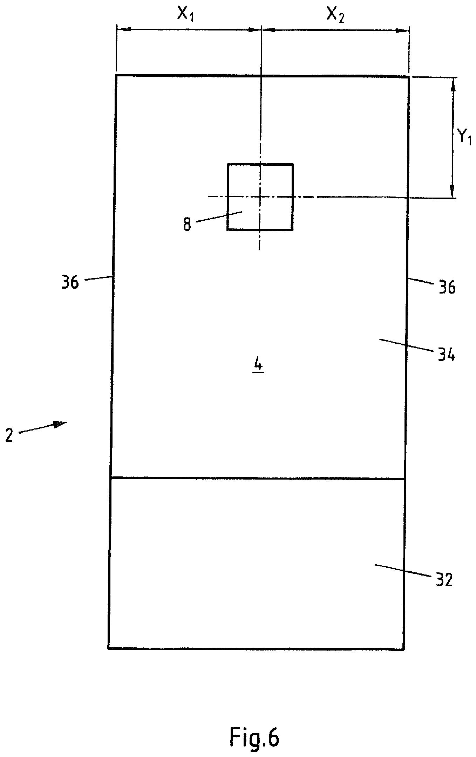

Fig. 6 zeigt nun eine Draufsicht auf ein erfindungsgemäßes Betonfertigdeckenteil 2 mit einer Bodenplatte 4. Der untere Teil 32 dient im fertigen Parkhaus als eine Hälfte der Fahrbahn zwischen zwei Reihen von Stellplätzen, während der obere Teil 34 einen solchen Stellplatz verwirklicht.

Die Ausnehmung 8 ist in Querrichtung der Bodenplatte 4 (horizontal in Fig. 6) an einer vorgegebenen Position mittig zu den Längskanten 36 angeordnet. Die beiden Pfeile x₁ und x₂ sind daher im Wesentlichen gleich lang. Wenn dann ein Fahrzeug mittig auf der Bodenplatte 4 abgestellt wird, kann ein Aufladen mit einer in der Ausnehmung 8 angeordneten Aufladestation die Batterie des Fahrzeugs aufgeladen werden.

Des Weiteren ist die Ausnehmung 8 in Längsrichtung der Bodenplatte 4 an einer vorgegebenen Position angeordnet, die mit dem Pfeil y₁ relativ zum vorderen Rand der Bodenplatte 4 charakterisiert ist. Somit kann unabhängig vom Fahrzeugtyp ein induktives Aufladen eines Akkumulators des Fahrzeugs ermöglicht werden, wenn das Fahrzeug in geeigneter Weise abgestellt wird. Hierbei kann es eine Einparkhilfe geben, die dem Fahrer anzeigt, wie weit er das Fahrzeug vorfahren muss, um ein optimales Aufladen zu ermöglichen.

Um ein variables Anordnen der Aufladestation innerhalb der Ausnehmung 8 zu ermöglichen, weist die Ausnehmung 8 eine Erstreckung in Längsrichtung auf, die größer, insbesondere mindestens zweifach größer als die Längsausdehnung der Aufladestation 10 ist. Ebenso kann die Ausnehmung 8 eine Erstreckung in Querrichtung aufweisen, die größer, insbesondere mindestens zweifach größer als die Querausdehnung der Aufladestation ist. Somit ist genügend Platz innerhalb der Ausnehmung 8 für ein geeignetes Anordnen der Aufladestation 10. Zudem ist diese Ausgestaltung unabhängig vom Typ und Größe der Aufladestation 10.

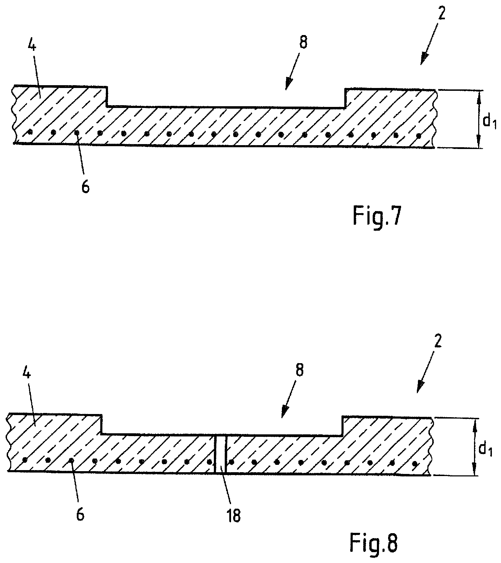

Fig. 7 zeigt nun ein Ausführungsbeispiel eines Betonfertigbauteils 2 mit einer innerhalb der Bodenplatte 4 angeordneten Textilbewehrung 40, die bevorzugt aus Carbonfasern besteht. Durch das Verwenden einer nicht-rostenden Bewehrung benötigt die Bodenplatte 4 keine zusätzlichen Schutzmaßnahmen, wenn die Vertiefung 8 in die Oberseite der Bodenplatte 4 eingebracht wird, also weder eine zusätzliche Dicke, also mehr Beton oberhalb der Bewehrung, noch eine Schutzschicht wie bei den zuvor beschriebenen Ausführungsbeispielen. Der Aufbau der Bodenplatte 4 wird dadurch nochmals vereinfacht.

Fig. 8 zeigt ein Ausführungsbeispiel, bei dem, wie schon zur Fig. 3 beschrieben worden ist, die Bodenplatte 4 einen Durchgang 18 zur Unterseite der Bodenplatte 4 aufweist. Der Durchgang 18 dient erneut einer Durchführung einer Kabelverbindung.

## Patentansprüche

1. Betonfertigdeckenteil für ein Parkhaus,
- mit einer aus einem Beton hergestellten Bodenplatte (4) und
- mit einer Ausnehmung (8), die für die zumindest teilweise Aufnahme einer induktiven Aufladestation (10) in der Bodenplatte (4) vorgesehen ist,
**dadurch gekennzeichnet,**
- **dass** die Bodenplatte (4) mit einer Bewehrung (6; 40) versehen ist,
- **dass** die Ausnehmung in der Oberseite der Bodenplatte (4) ausgebildet ist und
- **dass** die Ausnehmung (8) eine Schutzschicht (12) gegen das Eindringen von Wasser in die Bodenplatte (4) aufweist

2. Betonfertigdeckenteil nach Anspruch 1,
**dadurch gekennzeichnet,**
**dass** die Schutzschicht (12) aus einem der Materialien ausgewählt ist:
Kunststoff, Bitumen, Asphalt, Lack, Epoxydharz, Metall, insbesondere Edelstahl oder Aluminium, ultrahochfester Beton (UHPC - Ultra High Performance Concrete).

3. Betonfertigdeckenteil nach Anspruch 1 oder 2,
**dadurch gekennzeichnet,**
- **dass** die Ausnehmung (8) eine Unterseite (14) und Seitenwände (16) aufweist und
- **dass** die Schutzschicht (12) an der Unterseite (14) und an den Seitenwänden (16) ausgebildet ist.

4. Betonfertigdeckenteil nach einem der Ansprüche 1 bis 3,
**dadurch gekennzeichnet,**
**dass** die Ausnehmung (8) einen Durchgang (18) zur Unterseite der Bodenplatte (4) aufweist.

5. Betonfertigdeckenteil nach einem der Ansprüche 1 bis 4,
**dadurch gekennzeichnet,**
**dass** die Ausnehmung (8) einen Deckel (24) aufweist.

6. Betonfertigdeckenteil nach Anspruch 1 oder 2,
**dadurch gekennzeichnet,**
- **dass** die Ausnehmung (8) als Öffnung (25) mit umlaufenden Seitenwänden (26) ausgebildet ist und
- **dass** die Schutzschicht (12) an den Seitenwänden (26) ausgebildet ist.

7. Betonfertigdeckenteil nach Anspruch 6,
**dadurch gekennzeichnet,**
**dass** in der Ausnehmung (8) eine sich horizontal erstreckende Haltevorrichtung (30) zum Tragen und Positionieren der Aufladestation (10) vorgesehen ist.

8. Betonfertigdeckenteil nach Anspruch 7,
**dadurch gekennzeichnet,**
**dass** die Haltevorrichtung (30) aus dem gleichen Material wie die Schutzschicht (12), insbesondere integral mit der Schutzschicht (12) ausgebildet ist.

9. Betonfertigdeckenteil nach einem der Ansprüche 1 bis 8,
**dadurch gekennzeichnet,**
**dass** eine induktive Aufladestation (10) in der Ausnehmung (8) angeordnet, insbesondere befestigt, vorzugsweise mittels Klebstoff oder durch eine mechanische Befestigungsvorrichtung verbunden ist.

10. Verfahren zum Herstellen eines Betonfertigdeckehteils für ein Parkhaus nach einem der Ansprüche 1 bis 9,
- bei dem in einer Schalung eine Bewehrung angeordnet wird,
- bei dem in der Schalung ein Ausschalungselement für das Ausbilden einer Ausnehmung angeordnet wird,
- bei dem zur Herstellung einer Bodenplatte die Schalung mit einem Beton ausgefüllt wird und
- bei dem die Ausnehmung mit einer Schutzschicht versehen wird.

11. Verfahren nach Anspruch 10,
bei dem nach dem Aushärten des Betons das Ausschalungselement entnommen wird.

12. Verfahren nach Anspruch 10,
bei dem nach dem Aushärten des Betons das Ausschalungselement in der Bodenplatte verbleibt und als Schutzschicht verwendet wird.

## Claims

1. Precast concrete ceiling part for a car park,
- with a base plate (4) made of concrete and
- with a recess (8) provided for at least partially receiving an inductive charging station (10) in the base plate (4),
**characterised in that**
- the base plate (4) is provided with a reinforcement (6; 40),
- the recess is formed in the upper side of the base plate (4) and
- the recess (8) has a protective layer (12) against the penetration of water into the base plate (4).

2. Precast concrete ceiling part according to claim 1,
**characterised in that**
the protective layer (12) is selected from one of the following materials:
plastic, bitumen, asphalt, paint, epoxy resin, metal, in particular stainless steel or
aluminium, ultra-high performance concrete (UHPC).

3. Precast concrete ceiling part according to claim 1 or 2,
**characterised in that**
- the recess (8) has an underside (14) and sidewalls (16), and
- the protective layer (12) is formed on the underside (14) and on the sidewalls (16).

4. Precast concrete ceiling part according to one of claims 1 to 3,
**characterised in that**
the recess (8) has a passage (18) to the underside of the base plate (4).

5. Precast concrete ceiling part according to one of claims 1 to 4,
**characterised in that**
the recess (8) has a cap (24).

6. Precast concrete ceiling part according to claim 1 or 2,
**characterised in that**
- the recess (8) is formed as an opening (25) with circumferential sidewalls (26) and
- the protective layer (12) is formed on the side walls (26).

7. Precast concrete ceiling part according to claim 6,
**characterised in that**
a horizontally extending holding device (30) is provided in the recess (8) for supporting and positioning the charging station (10).

8. Precast concrete ceiling part according to claim 7,
**characterised in that**
the holding device (30) is made of the same material as the protective layer (12), in particular is formed integrally with the protective layer (12).

9. Precast concrete ceiling part according to one of claims 1 to 8,
**characterised in that**
an inductive charging station (10) is arranged, in particular fastened, in the recess (8), preferably by means of adhesive or by a mechanical fastening device.

10. Method of producing a precast concrete ceiling part for a car park according to any one of claims 1 to 9,
- in which a reinforcement is arranged in a formwork,
- in which a formwork element for forming a recess is arranged in the formwork,
- in which the formwork is filled with concrete in order to produce a base plate, and
- in which the recess is provided with a protective layer.

11. The method according to claim 10,
wherein the formwork element is removed after the concrete has hardened.

12. The method according to claim 10,
wherein after curing of the concrete the formwork element remains in the base plate and is used as a protective layer.

## Revendications

1. Partie de plafond préfabriquée en béton pour un parking à étages,
- avec une dalle de plancher (4) en béton et
- avec un évidement (8) qui est prévu pour loger au moins partiellement une station de charge inductive (10) dans la dalle de plancher (4),
**caractérisée en ce**
- **que** la dalle de plancher (4) est pourvue d'une armature (6; 40)
- **que** l'évidement est formé dans le côté supérieur de la dalle de plancher (4), et
- **que** l'évidement (8) présente une couche protectrice (12) contre la pénétration de l'eau dans la dalle de plancher (4).

2. Partie de plafond préfabriquée en béton selon la revendication 1,
**caractérisée en ce**
**que** la couche protectrice (12) est choisie parmi l'un des matériaux:
plastique, bitume, asphalte, vernis, résine époxy, métal, en particulier acier inoxydable ou aluminium, béton à ultra-hautes performances (BUHP).

3. Partie de plafond préfabriquée en béton selon la revendication 1 ou 2,
**caractérisée en ce**
- **que** l'évidement (8) a une face inférieure (14) et des parois latérales (16), et
- **que** la couche protectrice (12) est formée sur la face inférieure (14) et sur les parois latérales (16).

4. Partie de plafond préfabriquée en béton selon l'une quelconque des revendications 1 à 3,
**caractérisée en ce**
**que** l'évidement (8) présente un passage (18) vers la face inférieure de la dalle de plancher (4).

5. Partie de plafond préfabriquée en béton selon l'une quelconque des revendications 1 à 4,
**caractérisée en ce**
**que** l'évidement (8) comprend un couvercle (24).

6. Partie de plafond préfabriquée en béton selon la revendication 1 ou 2,
**caractérisée en ce**
- **que** l'évidement (8) est formé comme une ouverture (25) avec des parois latérales circonférentielles (26), et
- en ce que la couche protectrice (12) est formée sur les parois latérales (26).

7. Partie de plafond préfabriquée en béton selon la revendication 6,
**caractérisée en ce**
**qu'**un dispositif de maintien (30) s'étendant horizontalement est prévu dans l'évidement (8) pour supporter et positionner la station de charge (10).

8. Partie de plafond préfabriquée en béton selon la revendication 7,
**caractérisée en ce**
**que** le dispositif de maintien (30) est fait du même matériau que la couche protectrice (12), en particulier est formé d'un seul tenant avec la couche protectrice (12).

9. Partie de plafond préfabriquée en béton selon l'une quelconque des revendications 1 à 8,
**caractérisée en ce**
**qu'**une station de charge inductive (10) est disposée dans l'évidement (8), en particulier fixée, de préférence reliée au moyen d'un adhésif ou d'un dispositif de fixation mécanique.

10. Procédé de fabrication d'une partie de plafond préfabriquée en béton pour un parking à étages selon l'une quelconque des revendications 1 à 9,
- dans lequel une armature est disposée dans un coffrage,
- dans lequel un élément de coffrage destiné à former un évidement est disposé dans le coffrage,
- dans lequel le coffrage est rempli d'un béton afin de produire une dalle de plancher, et
- dans lequel l'évidement est pourvu d'une couche protectrice.

11. Procédé de la revendication 10,
dans lequel, après que le béton a durci, l'élément de coffrage est retiré.

12. Procédé de la revendication 10,
dans lequel, après que le béton a durci, l'élément de coffrage reste dans la dalle de plancher et est utilisé comme une couche protectrice.
